# EUROPEAN PATENT SPECIFICATION

(11) **EP 3 702 538 B1**
(45) Date of publication and mention of the grant of the patent: **13.08.2025**
(21) Application number: 20159997.4
(22) Date of filing: 28.02.2020
(51) Int. Cl.: E02F 9/20

(54) **METHOD AND SYSTEM FOR CONTROLLING WHEEL LOADER**
VERFAHREN UND SYSTEM ZUR STEUERUNG EINES RADLADERS
PROCÉDÉ ET SYSTÈME DE COMMANDE DE CHARGEUR DE ROUE

(30) Priority: 28.02.2019 KR 20190023584
(43) Date of publication of application: 02.09.2020
(73) Proprietor: HD Hyundai Infracore Co., Ltd., Incheon 22502 (KR)
(72) Inventor: HEO, Yeonhaeng, 22735 Incheon (KR); KO, Byungjae, 14506 Gyeonggi-do (KR); OH, Jinhyuk, 22735 Incheon (KR)
(74) Representative: Isarpatent

(56) References cited:
- EP-A1- 3 093 400
- US-A1- 2008 234 902
- US-A1- 2015 139 767
- US-A1- 2017 247 860

## Description

### BACKGROUND

### 1. Field

Example embodiments relate to a method and a system for controlling a wheel loader. More particularly, example embodiments relate to a method of performing an autonomous excavation work for a wheel loader and a system for controlling a wheel loader.

### 2. Description of the Related Art

Wheel loaders are widely used at construction sites to excavate aggregate such as dirt, sand, gravel and the like and load it into dump truck. Since the aggregate may be inhomogeneous loose soil or a somewhat compact material, the excavation work for digging the aggregate may be easy or difficult depending on the type of the aggregate. Further, load applied to the wheel loader may vary depending on the aggregate, which may result in tire slip. In particular, when the autonomous wheel loader performs the autonomous excavation work, the tire slip may occur thereby reducing the tire life and deteriorating productivity.

US 20008/0234902 A1 provides a method and system for controlling a vehicle comprises a torque detector for detecting a first torque level and a second torque level applied to at least one wheel of the vehicle. US 2017/0247860 A1 provides a method for controlling loading material to a bucket of a work machine from a stack of material. EP 3 093 400 A1 provides a method of controlling a wheel loader, including signals representing a state of work currently performed by the wheel loader received from sensors installed in the wheel loader. Document US2015/139767A1 discloses another example of a working machine with a tire slip reduction system.

### SUMMARY

Example embodiments provide a method of controlling a wheel loader capable of performing an autonomous excavation function to improve fuel efficiency and productivity.

Example embodiments provide a control system of a wheel loader for performing the method.

According to the present invention, in a method of controlling a wheel loader, the wheel loader is moved forwards such that a bucket penetrates into an aggregate to perform an excavation work, as defined by independent claim 1. Signals able to be used to determine tire slip of the wheel loader are obtained during the excavation work. Prediction algorithms obtained through training are performed to determine whether or not the tire slip occurs. In case of the tire slip, an engine speed is decreased and the bucket is lifted to remove the tire slip until after a point at which a tire tractive force and a bucket breakout force are equal to each other in case of the tire slip. The bucket is moved along a predetermined autonomous excavation trajectory when the tire slip is removed. The performing the prediction algorithms comprises performing algorithms trained using data on a first group of signals for the tire tractive force and a second group of signals for the bucket breakout force as learning data for the tire slip determination

In the present invention, obtaining the signals able to be used to determine the tire slip of the wheel loader includes obtaining a first group of signals required for calculating a tractive force of the tire, and obtaining a second group of signals required for calculating a breakout force of the bucket.

In the present invention, the first group of signals includes an engine rotational speed signal, a turbine rotational speed signal of a torque converter, a speed step signal of a transmission, a vehicle speed signal and a wheel rotational speed signal, and the second group of signals may include a stroke signal of a boom cylinder, a stroke signal of a bucket cylinder and a pressure signal of the boom cylinder.

In example embodiments, the wheel rotational speed signal may be obtained from an encoder installed in the tire.

In example embodiments, moving the wheel loader forwards to perform the excavation work may include increasing an engine speed without an operator stepping on an acceleration pedal.

In example embodiments, lifting the bucket when the tire slip occurs may include increasing a stroke of a boom cylinder.

In example embodiments, the method may further include determining a time when the bucket penetrates into the aggregate and a speed step of a transmission is shifted down from second step to first step as an entry time of the excavation work.

In example embodiments, the method may further include terminating the autonomous excavation work mode when an angle of the bucket is at the maximum crowd state.

According to the present invention, a control system for a wheel loader includes a plurality of sensors installed respective in an engine and a work apparatus and a travel apparatus driven by the engine to detect signals able to be used to determine tire slip of the wheel loader, a control apparatus configured to output a control signal for performing an autonomous excavation work mode of the wheel loader, perform prediction algorithms obtained through training on the signals received from the sensors to determine whether or not the tire slip occurs and output first and second tire slip removal control signals so as to remove the tire slip within a desired value, an engine control device configured to decrease an engine rotational speed according to the first tire slip removal control signal, and a work control device configured to lift a bucket of the wheel loader according to the second tire slip removal control signal, wherein the engine rotational speed is decreased and the bucket (30) is lifted until after a point at which a tire tractive force and a bucket breakout force are equal to each other, in case of the tire slip, wherein the control apparatus comprises a data receiver configured to receive the signals from the sensors, a determiner configured to perform neural network algorithms on the signals to determine whether or not the tire slip occurs, and an output portion configured to output the first and second tire slip removal control signals to the engine control device and the work control device respectively, as defined by independent claim 7.

In the present invention, the sensors includes a first group of sensors for detecting signals required for calculating a tractive force of a tire and a second group of sensors for detecting signals required for calculating a breakout force of the bucket.

In the present invention, the first group of sensors includes at least one of an engine speed sensor, a turbine rotational speed sensor of a torque converter, a sensor for detecting speed step of a transmission, a vehicle speed sensor and a wheel speed detection sensor, and a second group of sensors may include at least one of a boom angle sensor, a bucket angle sensor and a boom cylinder pressure sensor.

In example embodiments, the wheel speed detection sensor may include an encoder installed in the tire.

In example embodiments, the control apparatus may output an acceleration pedal output signal having a predetermined increase ratio value to the engine control device when the autonomous excavation work mode is entered, to increase the engine rotational speed.

In example embodiments, the first tire slip removal control signal may include an acceleration pedal output signal having a predetermined decrease ratio value.

In example embodiments, the second tire slip removal control signal may include a pilot pressure signal for increasing a stroke of a boom cylinder.

In example embodiments, the control apparatus may determine a time when the bucket penetrates into an aggregate and speed step of a transmission is shifted down from second step to first step as an entry time of the autonomous excavation work mode.

In example embodiments, the control apparatus may determine a time when an angle of the bucket is at the maximum crowd state as an end point of the autonomous excavation work mode.

According to example embodiments, a wheel loader may be controlled to perform an autonomous excavation work without an operator pressing an acceleration pedal when entering an autonomous excavation work mode. In addition, tire slip of the wheel loader may be determined by using prediction algorithm obtained through training such as neural network algorithms on signals received from sensors installed on the wheel loader, and when it is determined that the tire slip occurs, an engine speed may be decreased and the bucket may be lifted to remove the tire slip within a desired range.

Artificial neural network algorithms for a digging force and a tractive force that change according to the type and state of the aggregate may be used to control real-time equipment to thereby implement full autonomous excavation function. Thus, tire product life may be prevented from shortening due to excessive slippage of tires and optimized excavation trajectory control may be performed regardless of the operator's skill to thereby improve productivity.

### BRIEF DESCRIPTION OF THE DRAWINGS

Example embodiments will be more clearly understood from the following detailed description taken in conjunction with the accompanying drawings.
FIG. 1 is a side view illustrating a wheel loader in accordance with example embodiments.
FIG. 2 is a block diagram illustrating a system for controlling the wheel loader in FIG. 1.
FIG. 3 is a block diagram illustrating a control system for a wheel loader in accordance with example embodiments.
FIG. 4 is a block diagram illustrating a control apparatus in FIG. 3.
FIG. 5 is a view illustrating a neural network circuit in a tire slip determiner in FIG. 4.
FIG. 6 is a view illustrating a signal transfer in each layer of the neural network in FIG. 5.
FIG. 7 is a graph illustrating a tractive force of a tire according to an acceleration pedal output signal inputted to an engine control unit from the control apparatus in FIG. 3.
FIG. 8 is a graph illustrating a height of a buck according to a pilot pressure signal inputted to a work control apparatus from the control apparatus in FIG. 3.
FIG. 9 is a flow chart illustrating a method of controlling a wheel loader in accordance with example embodiments.
FIG. 10 is views illustrating an entry time of an auto-excavation work mode in accordance with example embodiments.
FIG. 11 is graphs illustrating a tractive force of tire and a breakout force of a bucket in accordance with example embodiments.

### DETAILED DESCRIPTION OF EXAMPLE EMBODIMENTS

Various example embodiments will be described more fully hereinafter with reference to the accompanying drawings, in which example embodiments are shown. Example embodiments may, however, be embodied in many different forms and should not be construed as limited to example embodiments set forth herein. Rather, these example embodiments are provided so that this disclosure will be thorough and complete, and will fully convey the scope of example embodiments to those skilled in the art. In the drawings, the sizes and relative sizes of components or elements may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element or layer is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

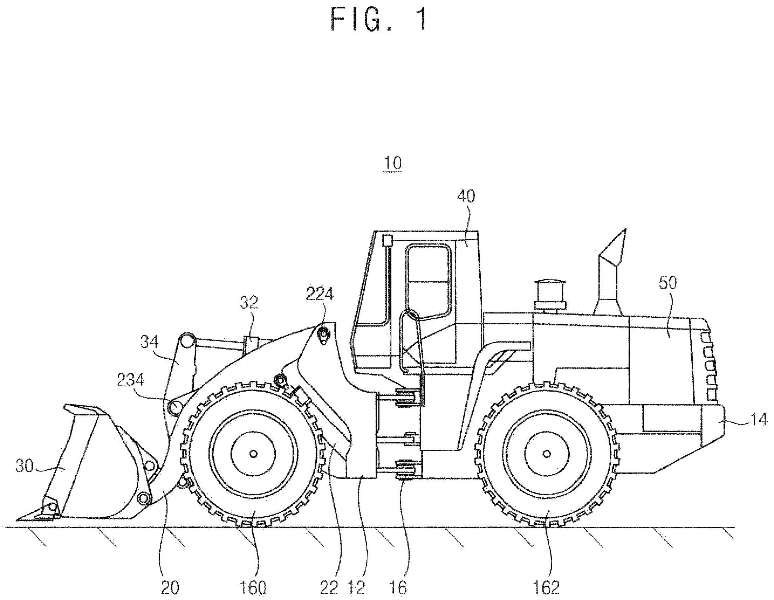

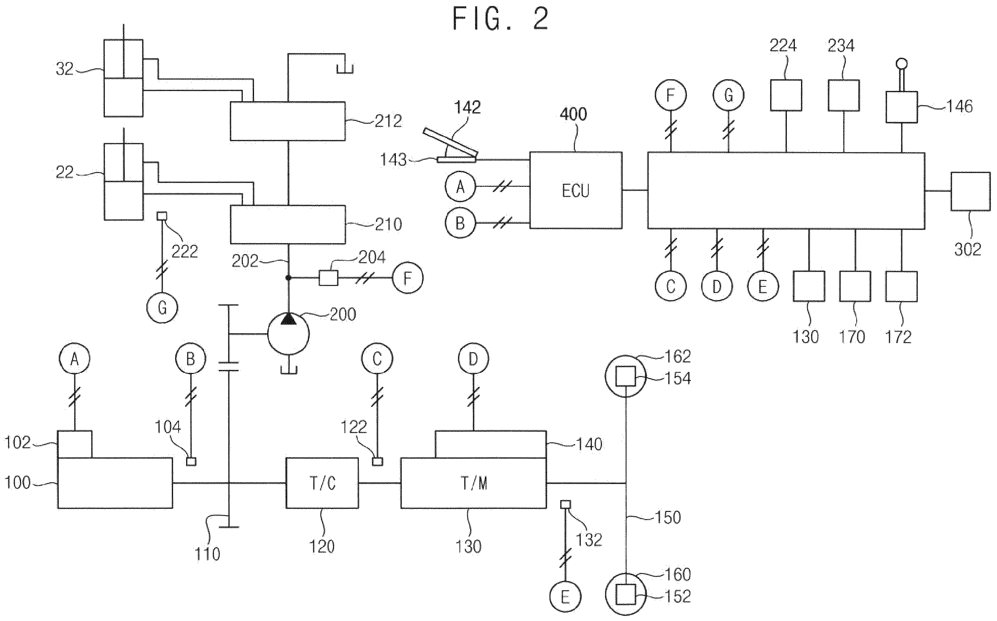

FIG. 1 is a side view illustrating a wheel loader in accordance with example embodiments. FIG. 2 is a block diagram illustrating a system for controlling the wheel loader in FIG. 1.

Referring to FIGS. 1 and 2, a wheel loader 10 may include a front body 12 and a rear body 14 connected to each other. The front body 12 may include a work apparatus and a front wheel 160. The rear body 14 may include a driver cabin 40, an engine bay 50 and a rear wheel 162.

The work apparatus may include a boom 20 and a bucket 30. The boom 20 may be freely pivotally attached to the front body 12, and the bucket 30 may be freely pivotally attached to an end portion of the boom 20. The boom 20 may be coupled to the front body 12 by a pair of boom cylinders 22, and the boom 20 may be pivoted upwardly and downwardly by expansion and contraction of the boom cylinders 22. A tilt arm 34 may be freely rotatably supported on the boom 20, almost at its central portion. One end portion of the tilt arm 34 may be coupled to the front body 12 by a pair of bucket cylinders 32 and another end portion of the tilt arm 34 may be coupled to the bucket 30 by a tilt rod, so that the bucket 30 may pivot (crowd and dump) as the bucket cylinder 32 expands and contracts.

The front body 12 and the rear body 14 may be rotatably connected to each other through a center pin 16 so that the front body 12 may swing side to side with respect to the rear body 14 by expansion and contraction of a steering cylinder (not illustrated).

A travel apparatus for propelling the wheel loader 10 may be mounted at the rear body 14. An engine 100 may be provided in the engine bay 50 to supply an output power to the travel apparatus. The travel apparatus may include a torque converter 120, a transmission 130, a propeller shaft 150, axles 152, 154, etc. The output power of the engine 100 may be transmitted to the front wheel 160 and the rear wheel 162 through the torque converter 120, the transmission 130, the propeller shaft 150 and the axles 152 and 154, and thus the wheel loader 10 may travels.

In particular, the output power of the engine 100 may be transmitted to the transmission 130 through the torque converter 120. An input shaft of the torque converter 120 may be connected to an output shaft of the engine 100, and an output shaft of the torque converter 120 may be connected to the transmission 130. The torque converter 120 may be a fluid clutch device including an impeller, a turbine and a stator. The transmission 130 may include hydraulic clutches that shift speed steps between first to fourth speeds, and rotation of the output shaft of the torque converter 120 may be shifted by the transmission 130. The shifted rotation may be transmitted to the front wheel 160 and the rear wheel 162 through the propeller shaft 150 and the axles 152 and 154 and thus the wheel loader may travel.

The torque converter 120 may have a function to increase an output torque with respect to an input torque, i.e., a function to make the torque ratio 1 or greater. The torque ratio may decrease with an increase in the torque converter speed ratio e (= Nt/Ni), which is a ratio of the number of rotations Nt of the output shaft of the torque converter 120 to the number of rotations Ni of the input shaft of the torque converter 120. For example, if travel load is increased while the vehicle is in motion in a state where the engine speed is constant, the number of rotations of the output shaft of the torque converter 120, i.e., the vehicle speed may be decreased. At this time, the torque ratio may be increased and thus the vehicle may be allowed to travel with a greater travel driving force (traction force).

The transmission 130 may include a forward hydraulic clutch for forward movement, a reverse hydraulic clutch for reverse movement, and first to fourth hydraulic clutches for the first to the fourth speeds. The hydraulic clutches may be each engaged or released by pressure oil (clutch pressure) supplied via a transmission control unit (TCU) 140. The hydraulic clutches may be engaged when the clutch pressure supplied to the hydraulic clutches is increased, while the hydraulic clutches may be released when the clutch pressure is decreased.

When travel load is decreased and the torque converter speed ratio e is increased to be equal to or greater than a predetermined value eu, a speed step may be shifted up by one step. On the other hand, when travel load is increased and the torque converter speed ratio e is decreased to be equal to or less than a predetermined value ed, the speed step may be shifted down by one step.

A variable capacity hydraulic pump 200 for supplying a pressurized hydraulic fluid to the boom cylinder 22 and the bucket cylinder 32 may be mounted at the rear body 14. The variable capacity hydraulic pump 200 may be driven using at least a portion of the power outputted from the engine 100. For example, the output power of the engine 100 may drive the hydraulic pump 200 for the work apparatus and a hydraulic pump (not illustrated) for the steering cylinder via a power take-off (PTO) such as a gear train 110.

A pump control device (EPOS, Electronic Power Optimizing System) may be connected to the variable capacity hydraulic pump 200, and the hydraulic fluid discharged from the variable capacity hydraulic pump 200 may be controlled by the pump control device. A main control valve (MCV) including a boom control valve 210 and a bucket control valve 212 may be installed on a hydraulic circuit of the hydraulic pump 200. The hydraulic fluid discharged from the hydraulic pump 200 may be supplied to the boom cylinder 22 and the bucket cylinder 32 through the boom control valve 210 and the bucket control valve installed in a hydraulic line 202 respectively. The main control valve (MCV) may supply the hydraulic fluid discharged from the hydraulic pump 200 to the boom cylinder 22 and the bucket cylinder 32 according to a pilot pressure in proportion to an operation rate of an operating lever. Thus, the boom 20 and the bucket 30 may be driven by the pressure of the hydraulic fluid discharged from the hydraulic pump 200.

A maneuvering device may be provided within the driver cabin 40. The maneuvering device may include an acceleration pedal 142, a brake pedal, an FNR travel lever, the operating levers for operating the cylinders such as the boom cylinder 22 and the bucket cylinder 32, etc.

As mentioned above, the wheel loader 10 may include a traveling operating system for driving the travel apparatus via the PTO and a hydraulic operating system for driving the work apparatus such as the boom 20 and the bucket 30 using the output power of the engine 100.

Further, a control apparatus 300 for the wheel loader 10 such as a portion of a vehicle control unit (VCU) or a separate control unit may be mounted in the rear body 14. The control apparatus 300 may include an arithmetic processing unit having a CPU which executes a program, a storage device such as a memory, other peripheral circuit, and the like.

The control apparatus 300 may receive signals from various sensors (detectors) which are installed in the wheel loader 10. For example, the control apparatus 300 may be connected to an engine speed sensor 104 for detecting a rotational speed of the engine, an acceleration pedal detection sensor 143 for detecting an operation amount of the acceleration pedal 142, a brake pedal detection sensor for detecting an operation amount of the brake pedal, and an FNR travel lever position sensor for detecting a manipulation position of the FNR travel lever, for example, forward (F), neutral (N) and reverse (R). Additionally, the control apparatus 300 may receive an engine rotational speed signal and an acceleration pedal signal from an engine control unit (ECU) connected to the engine speed sensor 104 and the acceleration pedal detection sensor 143. Further, the control apparatus 300 may receive a speed step signal of the transmission through the transmission control unit (TCU) 140.

In addition, the control apparatus 300 may be connected to a turbine rotational speed sensor 122 for detecting a rotational speed of the turbine of the torque converter 120, a vehicle speed sensor 132 for detecting a rotational speed of an output shaft of the transmission 130, i.e., and a wheel speed detection sensors 170, 172 for detecting a wheel speed. The wheel speed detection sensors 170, 172 may include an encoder installed in a tire. Alternatively, the control apparatus 300 may be connected to a GPS receiver installed in the wheel loader, to receive a current speed of the vehicle.

Further, the control apparatus 300 may be connected to a pressure sensor 204 installed in the hydraulic line 202 in front end of the main control valve (MCV) to detect a pressure of the hydraulic fluid discharged from the hydraulic pump 200, and a boom cylinder pressure sensor 222 for detecting a cylinder head pressure at a head of the boom cylinder 22. Furthermore, the control apparatus 300 may be connected to a boom angle sensor 224 for detecting a rotational angle of the boom 20 and a bucket angle sensor 234 for detecting a rotational angle of the bucket 30.

As illustrated in FIGS. 1 and 2, the signals detected by the sensors may be inputted into the control apparatus 300. As mentioned later, the control apparatus 300 may select one or more signals of the signals received from the sensors installed in the wheel loader 10, perform prediction algorithms obtained through training such as neural network algorithms to determine whether or not tire slip occurs. Further, the control apparatus 300 may output a control signal to the engine control unit (ECU), the transmission control unit (TCU) 140, and the pump control device (EPOS), etc, to selectively control the travel apparatus and the work apparatus of the wheel loader 10 based on the occurrence of the tire slip.

Hereinafter, the control apparatus for controlling the wheel loader will be explained.

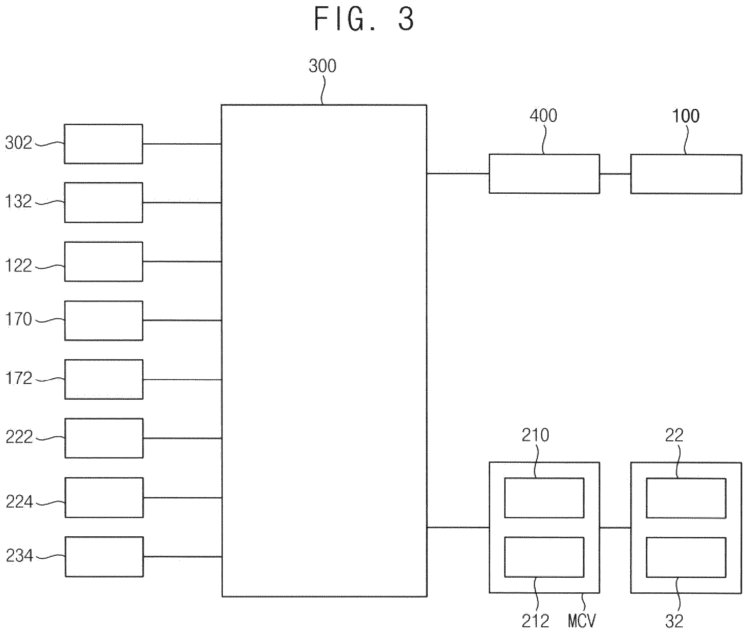

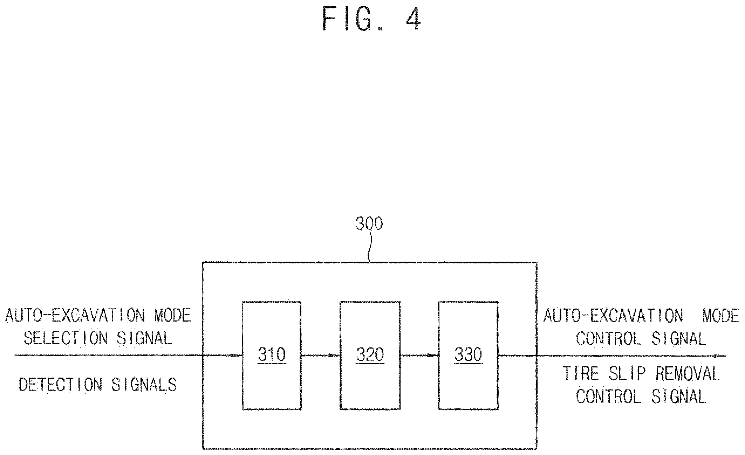

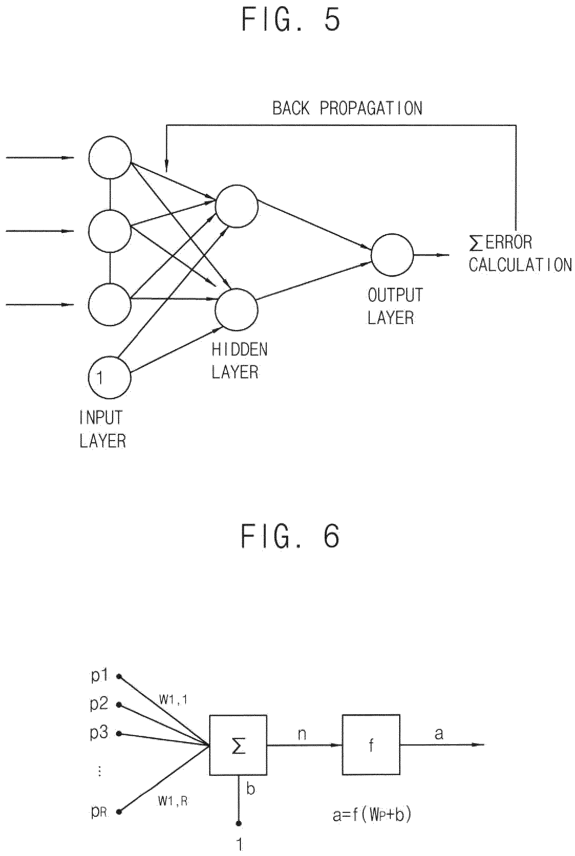

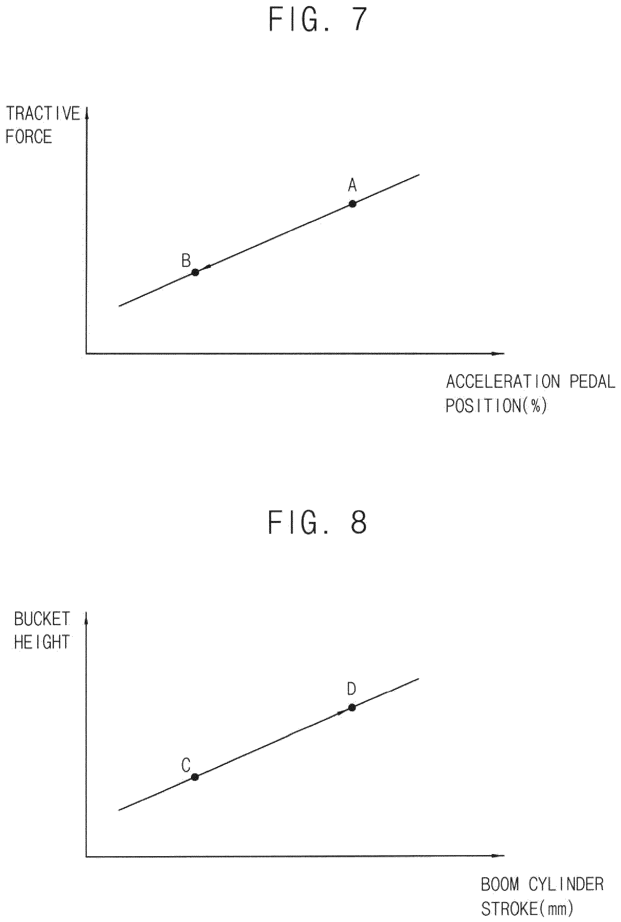

FIG. 3 is a block diagram illustrating a control system for a wheel loader in accordance with example embodiments. FIG. 4 is a block diagram illustrating a control apparatus in FIG. 3. FIG. 5 is a view illustrating a neural network circuit in a tire slip determiner in FIG. 4. FIG. 6 is a view illustrating a signal transfer in each layer of the neural network in FIG. 5. FIG. 7 is a graph illustrating a tractive force of a tire according to an acceleration pedal output signal inputted to an engine control unit from the control apparatus in FIG. 3. FIG. 8 is a graph illustrating a height of a buck according to a pilot pressure signal inputted to a work control apparatus from the control apparatus in FIG. 3.

Referring to FIGS. 3 to 8, a control system for a wheel loader may include a plurality of sensors, a control apparatus 300 for performing an autonomous excavation work mode, a travel apparatus control device and a work apparatus control device.

The sensors may be installed in the engine 100, the work apparatus and the travel apparatus to detect signals representing state information of the wheel loader. In particular, the control system form a wheel loader may include a first group of sensors for detecting signals required for calculating a tractive force of a tire of the wheel loader 10 and a second group of sensors for detecting signals required for calculating a breakout (digging) force of a bucket.

For example, the first group of sensors may include the engine speed sensor 104, the turbine rotational speed sensor 122, the sensor for detecting the speed step of the transmission, the vehicle speed sensor 132, the wheel speed detection sensor, etc. The second group of sensors may include the boom angle sensor 224, the bucket angle sensor 234, the boom cylinder pressure sensor 222, etc.

The control apparatus 300 may include a data receiver 310, a determiner 320 and an output portion 330.

The data receiver 310 may receive signals from the sensors. Additionally, the data receiver 310 may receive an autonomous excavation work mode selection signal from a selection portion 302. When the autonomous excavation work mode is selected by an operator, the selection portion 302 may output the autonomous excavation work mode selection signal to the control apparatus 300. Further, the operator may select detail working conditions of the autonomous excavation work mode through the selection portion 302. The detail working conditions may include an excavation workload, an excavation work speed, an allowable range of tire slip, and the like.

The determiner 320 may determine the entry time and end point of the autonomous excavation work mode. The determiner 320 may determine a time when the bucket 30 penetrates into the aggregate as the entry time of the autonomous excavation work mode. When the bucket 30 digs the aggregate and load is applied to the travel apparatus by the reaction force, and the speed step of the transmission 130 is shifted down to the first step, it may be determined as the entry time of the autonomous excavation work mode. When the angle of the bucket 30 is at the maximum crowd state, it may be determined as the end point of the autonomous excavation work mode.

Additionally, the determiner 320 may include neural network circuits that perform neural network algorithms to determine whether or not the tire slip occurs.

As illustrated in FIGS. 5 and 6, the neural network circuit may include multilayer perceptrons having a multi-input layer, a hidden layer and an output layer. Neurons may be arranged in each layer, and the neurons in each layer may be connected by connection weights. Input data may be inputted to the neurons in the input layer and transferred to the output layer though the hidden layer.

Training the neural network algorithm may be a process of tuning the interconnection weights between each nodes in order to minimize an error between an expectation value and an output value of the neural network algorithms for a specific input (actual detected data). For example, back propagation algorithm may be used for training the neural networks. Accordingly, the neural network circuits of the determiner 320 may vary the connection weights between the input layer, the hidden layer and the output layer using pre-collected data to provide neural network algorithms as prediction models.

In example embodiments, data obtained from the first group of sensors and the second group of sensors may be accumulated and may be used as learning data. For example, the tire slip moments may be recorded on the basis of the number of the tire revolutions obtained from the external encoder 170, 172 installed in the tire, and tire slip occurrence data may be accumulated and used as learning data. The GPS speed of the wheel loader 10, the breakout force of the bucket 30, the acceleration pedal value from the engine control unit 400, etc. may be used as supervised leaning data for the tire slip determination. As an example, although the tire tractive force is greater than a predetermined value and the acceleration pedal signal value does not decrease (not have a negative rate of change), data when the tire tractive force decreases by a predetermined level or more may be used as supervised learning data for the tire slip determination. Additionally, data when the bucket breakout force increases and the number of the tire revolutions increases may be used as supervised learning data for the tire slip determination.

Through supervised learning, the sensor signal weight of the artificial neural network logic may be determined and the tire slip may be determined from the sensor signals.

The output portion 330 may output an autonomous excavation work mode control signal for the autonomous excavation work mode and first and second tire slip removal control signals for removing the tire slip within a desired value.

The autonomous excavation work mode control signal may include an acceleration pedal output signal having a predetermined increase ratio value. The output portion 330 may output the autonomous excavation work mode control signal to the engine control device 400 when the autonomous excavation work mode is entered. The engine control device 400 may increase the engine speed by controlling a fuel injector 102 according to the autonomous excavation work mode control signal without the operator pressing the acceleration pedal.

The first tire slip removal control signal may include an acceleration pedal output signal having a predetermined decrease ratio value. The output portion 330 may output the acceleration pedal output signal to the engine control device 400 when the tire slip occurs. The engine control device 400 may decrease the engine speed by controlling the fuel injector 102 according to the first tire slip removal control signal.

The second tire slip removal control signal may include a pilot pressure signal for increasing a stroke of the boom cylinder 22. The output portion 330 may output the pilot pressure signal to the work control apparatus, that is, the boom control valve 210 of the main control valve MCV when the tire slip occurs. The boom control valve 210 may increase the stroke of the boom cylinder 210 according to the pilot pressure signal to increase a height of the bucket 30.

The control apparatus 300 may further include a storage portion. The storage portion may store data required for learning in a predictive model and calculation in the neural network algorithm which are performed in the determiner 330, a control map required for determination of the control signal which is performed in the output portion 330, etc.

As illustrated in FIG. 7, in response to the acceleration pedal output signal having the predetermined decrease ratio value, the fuel injection amount may be decreased and thus the engine speed may be also decreased. In this case, the tractive force of the tire may be decreased according to the acceleration pedal decrease ratio (%) (point A -> point B). As the tractive force of the tire is decreased the tire slip may be removed.

As illustrated in FIG. 8, in response to the pilot pressure signal, the stroke of the boom cylinder 22 may be increased, thereby raising the height of the bucket 30. In this case, the height of the bucket 30 may be increased according to the stroke increase rate of the boom cylinder 22 (point C -> point D). The bucket 30 may lift the aggregate upwards and thus the load on the tire may be increased to thereby remove the tire slip.

As described above, the control apparatus 300 of the wheel loader may control the wheel loader 10 to perform the autonomous excavation work without the operator pressing the acceleration pedal when entering the autonomous excavation work mode. In addition, the control apparatus 300 of the wheel loader may determine the tire slip of the wheel loader 10 by using prediction algorithm obtained through training such as neural network algorithms on the signals received from the sensors installed on the wheel loader 10, and when it is determined that the tire slip occurs, may decrease the engine speed and lift the bucket 30 to remove the tire slip.

The control apparatus 300 of the wheel loader may learn data of the tire slip by using the artificial neural network algorithms for the digging force and tractive force that change according to the type and state of the aggregate to adjust the determination weight of the equipment sensor signal and to control the real-time equipment to thereby implement full autonomous excavation function. Thus, tire product life may be prevented from shortening due to excessive slippage of tires and optimized excavation trajectory control may be performed regardless of the operator's skill to thereby improve productivity.

Hereinafter, a method of controlling a wheel loader using the control apparatus in FIG. 3 will be explained.

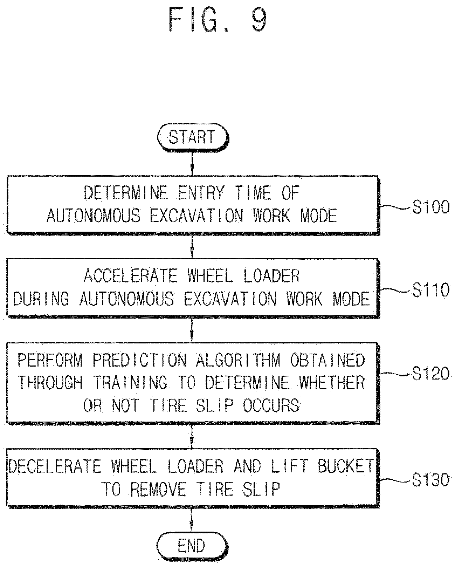

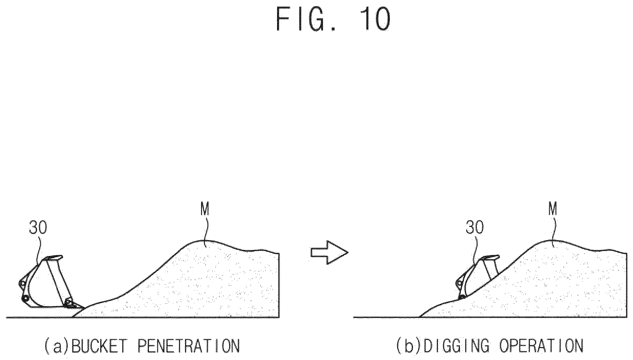

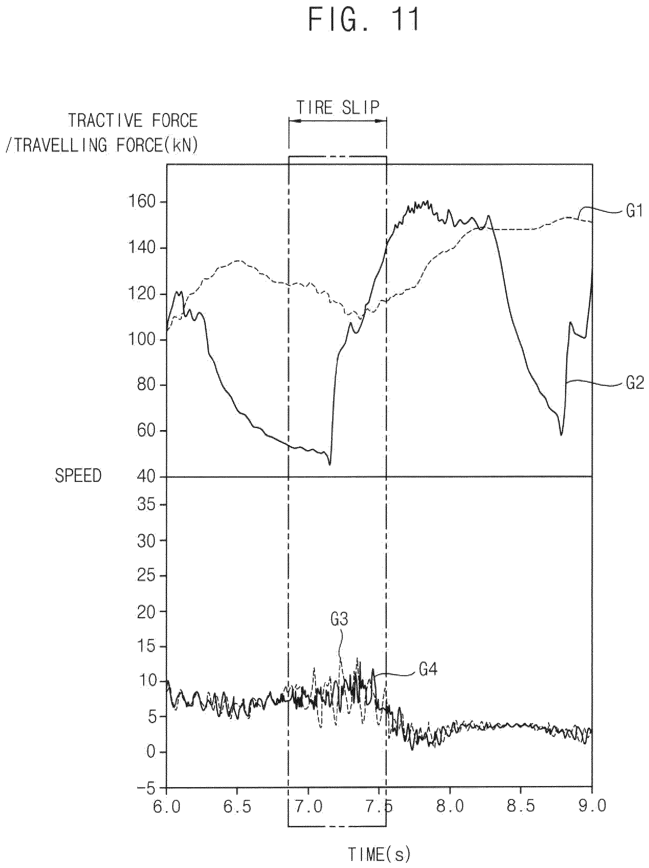

FIG. 9 is a flow chart illustrating a method of controlling a wheel loader in accordance with example embodiments. FIG. 10 is views illustrating an entry time of an auto-excavation work mode in accordance with example embodiments. FIG. 11 is graphs illustrating a tractive force of tire and a breakout force of a bucket in accordance with example embodiments.

Referring to FIGS. 1, 2, 3 and 9 to 11, first, an entry time of an autonomous excavation work mode may be determined (S 100), and when the autonomous excavation work mode is entered, a wheel loader 10 may be accelerated to perform an excavation work (S110).

In example embodiments, in case that an operator selects the autonomous excavation work mode through an selection portion 302, a time when a bucket 30 penetrates into an aggregate may be determined as the entry time of the autonomous excavation work mode.

As illustrated in FIG. 10 (a), the wheel loader 10 may move forwards and start to penetrate into the aggregate M. An angle of a bottom face of the bucket 30 may be kept parallel with the ground, and the boom 20 may be lowered so that the bottom face of the bucket 30 approaches closely to the ground. Then, as illustrated in FIG. 10 (b), the bucket 30 may dig the aggregate, and then, load is applied to a travel apparatus by the reaction force and the speed step of a transmission 130 is shifted down to the first step, it may be determined as the entry time of the autonomous excavation work mode.

Then, when the autonomous excavation work mode is entered, the wheel loader 10 may be accelerated to perform an autonomous excavation work.

For example, a control apparatus 300 may output an autonomous excavation work mode control signal to an engine control device 400 when the autonomous excavation work mode is entered. The autonomous excavation work mode control signal may include an acceleration pedal output signal having a predetermined increase ratio value. The engine control device 400 may increase an engine speed by controlling a fuel injector 102 according to the autonomous excavation work mode control signal without the operator pressing the acceleration pedal.

Then, during the autonomous excavation work mode, prediction algorithms obtained through training may be performed to determine whether or not tire slip occurs.

In example embodiments, during autonomous excavation work mode, the signals able to be used to determine the tire slip of the wheel loader 10 may be obtained. A first group of signals required for calculating a tractive force of a tire of the wheel loader 10 and a second group of signals required for calculating a breakout (digging) force of a bucket 30. The first group of signals may include an engine rotational speed signal, a turbine rotational speed signal of a torque converter, a speed step signal of a transmission, a vehicle speed signal and a wheel rotational speed signal. The second group of signals may include a stroke signal of a boom cylinder, a stroke signal of a bucket cylinder and a pressure signal of the boom cylinder.

Data obtained from the first group of signals and the second group of signals may be accumulated to be used as learning data. For example, the tire slip moments obtained from an external encoder 170, 172 installed in the tire may be recorded, and tire slip occurrence data may be accumulated to be used as learning data. The GPS speed of the wheel loader 10, the tractive force of the tire, the breakout force of the bucket 30, the acceleration pedal value from the engine control unit 400, etc. may be used as supervised leaning data for the tire slip determination. Through supervised learning, the sensor signal weight of the artificial neural network logic may be determined and the tire slip may be determined from the sensor signals.

Then, when the tire slip occurs, the engine speed of the wheel loader 10 may be decreased and the bucket 30 may be lifted until the tire slip is removed within a desired value (130).

For example, the control apparatus 300 may output a first tire slip removal control signal to the engine control device 400 when the tire slip occurs. The engine control device 400 may decrease the engine speed by controlling the fuel injector 102 according to the first tire slip removal control signal.

A fuel injection amount may be decreased in response to an acceleration pedal output signal having a predetermined decrease ratio value, and thus, the engine speed may be also decreased. The engine control device 400 may increase the engine speed by controlling a fuel injector 102 according to the autonomous excavation work mode control signal without the operator pressing the acceleration pedal. In this case, the tractive force of the tire may be decreased according the acceleration pedal decrease ratio and thus the tire slip may be removed.

Additionally, the control apparatus 300 may output a second tire slip removal control signal to a work control apparatus, that is, a boom control valve 210 of a main control valve MCV when the tire slip occurs. The second tire slip removal control signal may include a pilot pressure signal for increasing a stroke of the boom cylinder 22. The boom control valve 210 may increase the stroke of the boom cylinder 210 according to the pilot pressure signal to increase a height of the bucket 30.

The stroke of the boom cylinder 22 may be increased in response to the pilot pressure signal, thereby increasing the height of the bucket 30. In this case, the height of the bucket 30 may be increased according to the stroke increase rate of the boom cylinder 22. The bucket 30 may lift the aggregate upwards and thus the load on the tire may be increased to thereby remove the tire slip.

As illustrated in FIG. 11, graph G1 represents the tire tractive force and graph G2 represents the bucket digging force, and graphs G3 and G4 represent speeds of left and right wheels. In the tire slip section, the tire tractive force decreases and the GPS speed of the wheel loader 10 is constant or decreases, while the tire rotational speed (wheel speed) increases while vibrating rapidly. At this time, if the engine speed is decreased and the buck 20 is lifted to increase the bucket digging force, after the point at which the tire tractive force and the bucket dogging force are equal to each other, the tire slippage may disappear as the friction force with the ground increases, and thus, the tractive force may be increased again and the digging operation may be done smoothly.

Then, when the tire slip is removed, the bucket 30 may be moved along a predetermined autonomous digging trajectory, and the autonomous excavation work mode may be terminated.

For example, the control apparatus 300 may output the autonomous excavation control signal to the engine control device 400 and the work control device when the tire slip disappears. Thus, the strokes of the boom cylinder 22 and the bucket cylinder 32 may be controlled such that the end potion of the bucket 30 moves along the predetermined digging trajectory.

Then, when the wheel loader 10 moves forward while digging the aggregate and the angle of the bucket 30 is at the maximum crowd state, the autonomous excavation work mode may be terminated.

The foregoing is illustrative of example embodiments and is not to be construed as limiting thereof. Although a few example embodiments have been described, those skilled in the art will readily appreciate that many modifications are possible in example embodiments without materially departing from the novel teachings and advantages of the present invention. Accordingly, all such modifications are intended to be included within the scope of example embodiments as defined in the claims.

## Claims

1. A method of controlling a wheel loader (10), comprising:
moving the wheel loader (10) forwards such that a bucket (30) penetrates into an aggregate to perform an excavation work;
obtaining signals able to be used to determine tire slip of the wheel loader (10) during the excavation work;
performing prediction algorithms obtained through training to determine whether or not the tire slip occurs;
decreasing an engine speed and lifting the bucket (30) to remove the tire slip, until after a point at which a tire tractive force and a bucket breakout force are equal to each other, in case of the tire slip; and
moving the bucket (30) along a predetermined autonomous excavation trajectory when the tire slip is removed,
wherein performing the prediction algorithms comprises performing algorithms trained using data on a first group of signals for the tire tractive force and a second group of signals for the bucket breakout force as learning data for the tire slip determination,
wherein obtaining the signals able to be used to determine the tire slip of the wheel loader (10) comprises obtaining the first group of signals required for calculating the tire tractive force, and obtaining the second group of signals required for calculating the bucket breakout force, and
wherein the first group of signals includes at least one of an engine rotational speed signal, a turbine rotational speed signal of a torque converter, a speed step signal of a transmission, a vehicle speed signal and a wheel rotational speed signal, and the second group of signals includes at least one of a stroke signal of a boom cylinder, (22) a stroke signal of a bucket cylinder (32) and a pressure signal of the boom cylinder (22).

2. The method of claim 1, wherein the wheel rotational speed signal is obtained from an encoder installed in the tire.

3. The method of claim 1, wherein moving the wheel loader (10) forwards to perform the excavation work comprises increasing an engine speed without an operator stepping on an acceleration pedal (142).

4. The method of claim 1, wherein lifting the bucket (30) when the tire slip occurs comprises increasing a stroke of a boom cylinder (22).

5. The method of claim 1, further comprising:
determining a time when the bucket (30) penetrates into the aggregate and a speed step of a transmission is shifted down from second step to first step as an entry time of the excavation work.

6. The method of claim 1, further comprising:
terminating the autonomous excavation work mode when an angle of the bucket (30) is at the maximum crowd state.

7. A control system for a wheel loader (10), comprising:
a plurality of sensors installed respective in an engine (100) and a work apparatus and a travel apparatus driven by the engine (100) to detect signals able to be used to determine tire slip of the wheel loader (10);
a control apparatus (300) configured to output a control signal for performing an autonomous excavation work mode of the wheel loader (10), perform prediction algorithms obtained through training on the signals received from the sensors to determine whether or not the tire slip occurs and output first and second tire slip removal control signals so as to remove the tire slip within a desired value;
an engine control device (400) configured to decrease an engine rotational speed according to the first tire slip removal control signal; and
a work control device configured to lift a bucket (30) of the wheel loader (10) according to the second tire slip removal control signal,
wherein the engine rotational speed is decreased and the bucket (30) is lifted until after a point at which a tire tractive force and a bucket breakout force are equal to each other, in case of the tire slip;
wherein the control apparatus (300) comprises a data receiver (310) configured to receive the signals from the sensors, a determiner (320) configured to perform neural network algorithms on the signals to determine whether or not the tire slip occurs, and an output portion (330) configured to output the first and second tire slip removal control signals to the engine control device (400) and the work control device respectively,
wherein the sensors comprise a first group of sensors (104, 122, 132) for detecting signals required for calculating the tire tractive force and a second group of sensors (222, 224, 234) for detecting signals required for calculating the bucket breakout force, and
wherein the first group of sensors includes at least one of an engine speed sensor, a turbine rotational speed sensor of a torque converter, a sensor for detecting speed step of a transmission, a vehicle speed sensor and a wheel speed detection sensor, and a second group of sensors includes at least one of a boom angle sensor, a bucket angle sensor and a boom cylinder pressure sensor.

8. The control system for a wheel loader (10) of claim 7, wherein the control apparatus (300) outputs an acceleration pedal output signal having a predetermined increase ratio value to the engine control device (400) when the autonomous excavation work mode is entered, to increase the engine rotational speed.

9. The control system for a wheel loader (10) of claim 7, wherein the first tire slip removal control signal includes an acceleration pedal output signal having a predetermined decrease ratio value.

10. The control system for a wheel loader (10) of claim 7, wherein the second tire slip removal control signal includes a pilot pressure signal for increasing a stroke of a boom cylinder (22).

## Patentansprüche

1. Verfahren zum Steuern eines Radladers (10), umfassend:
Bewegen des Radladers (10) vorwärts, so dass eine Schaufel (30) in ein Aggregat eindringt, um eine Aushubarbeit durchzuführen;
Erhalten von Signalen, die verwendet werden können, um einen Reifenschlupf des Radladers (10) während der Aushubarbeit zu bestimmen;
Durchführen von Vorhersagealgorithmen, die durch Training erhalten wurden, um zu bestimmen, ob der Reifenschlupf auftritt oder nicht;
Verringern einer Motordrehzahl und Anheben der Schaufel (30), um den Reifenschlupf zu entfernen, bis nach einem Punkt, an dem eine Reifenzugkraft und eine Schaufelausbrechkraft im Falle des Reifenschlupfs einander gleich sind; und
Bewegen der Schaufel (30) entlang einer vorbestimmten autonomen Aushubbahn, wenn der Reifenschlupf entfernt ist,
wobei das Durchführen der Vorhersagealgorithmen ein Durchführen von Algorithmen, die trainiert wurden, unter Verwendung von Daten auf einer ersten Gruppe von Signalen für die Reifenzugkraft und einer zweiten Gruppe von Signalen für die Schaufelbrechkraft als Lerndaten für die Reifenschlupfbestimmung umfasst,
wobei das Erhalten der Signale, die verwendet werden können, um den Reifenschlupf des Radladers (10) zu bestimmen, ein Erhalten der ersten Gruppe von Signalen, die zum Berechnen der Reifenzugkraft erforderlich sind, und ein Erhalten der zweiten Gruppe von Signalen, die zum Berechnen der Schaufelausbrechkraft erforderlich sind, umfasst, und
wobei die erste Gruppe von Signalen ein Motordrehzahlsignal, ein Turbinendrehzahlsignal eines Drehmomentwandlers, ein Geschwindigkeitsstufensignal eines Getriebes, ein Fahrzeuggeschwindigkeitssignal und/oder ein Raddrehzahlsignal aufweist und die zweite Gruppe von Signalen ein Hubsignal eines Auslegerzylinders (22), ein Hubsignal eines Schaufelzylinders (32) und/oder ein Drucksignal des Auslegerzylinders (22) aufweist.

2. Verfahren nach Anspruch 1, wobei das Raddrehzahlsignal von einem Codierer erhalten wird, der in dem Reifen installiert ist.

3. Verfahren nach Anspruch 1, wobei das Bewegen des Radladers (10) vorwärts, um die Aushubarbeit durchzuführen, ein Erhöhen der Motordrehzahl umfasst, ohne dass ein Bediener auf ein Beschleunigungspedal (142) tritt.

4. Verfahren nach Anspruch 1, wobei das Anheben der Schaufel (30), wenn der Reifenschlupf auftritt, ein Erhöhen eines Hubes eines Auslegerzylinders (22) umfasst.

5. Verfahren nach Anspruch 1, ferner umfassend:
Bestimmen eines Zeitpunkts, zu dem die Schaufel (30) in das Aggregat eindringt und eine Geschwindigkeitsstufe eines Getriebes von einer zweiten Stufe auf eine erste Stufe heruntergeschaltet wird, als Anfangszeitpunkt der Aushubarbeit.

6. Verfahren nach Anspruch 1, ferner umfassend:
Beenden des autonomen Aushubarbeitsmodus, wenn ein Winkel der Schaufel (30) in dem maximalen Aufnahmezustand ist.

7. Steuersystem für einen Radlader (10), umfassend:
mehrere Sensoren, die jeweils in einem Motor (100) und einer Arbeitsvorrichtung und einer Fahrvorrichtung, die von dem Motor (100) angetrieben werden, installiert sind, um Signale zu erfassen, die verwendet werden können, um einen Reifenschlupf des Radladers (10) zu bestimmen;
eine Steuervorrichtung (300), die eingerichtet ist, um ein Steuersignal zum Durchführen eines autonomen Aushubarbeitsmodus des Radladers (10) auszugeben, Vorhersagealgorithmen, die durch Training erhalten wurden, an den Signalen, die von den Sensoren empfangen wurden, durchzuführen, um zu bestimmen, ob der Reifenschlupf auftritt oder nicht, und ein erstes und ein zweites Reifenschlupfentfernungs-Steuersignal auszugeben, um den Reifenschlupf innerhalb eines gewünschten Wertes zu entfernen;
eine Motorsteuervorrichtung (400), die eingerichtet ist, um eine Motordrehzahl gemäß dem ersten Reifenschlupfentfernungs-Steuersignal zu verringern; und
eine Arbeitssteuervorrichtung, die eingerichtet ist, um eine Schaufel (30) des Radladers (10) gemäß dem zweiten Reifenschlupfentfernungs-Steuersignal anzuheben,
wobei die Motordrehzahl verringert und die Schaufel (30) angehoben wird bis nach einem Punkt, an dem eine Reifenzugkraft und eine Schaufelausbrechkraft im Falle des Reifenschlupfs einander gleich sind;
wobei die Steuervorrichtung (300) einen Datenempfänger (310) umfasst, der eingerichtet ist, um die Signale von den Sensoren zu empfangen, einen Bestimmer (320), der eingerichtet ist, um Algorithmen eines neuronalen Netzes an den Signalen durchzuführen, um zu bestimmen, ob der Reifenschlupf auftritt oder nicht, und einen Ausgabeabschnitt (330), der eingerichtet ist, um das erste und das zweite Reifenschlupfentfernungs-Steuersignal an die Motorsteuerungsvorrichtung (400) bzw. die Arbeitssteuerungsvorrichtung auszugeben,
wobei die Sensoren eine erste Gruppe von Sensoren (104, 122, 132) zum Erfassen von Signalen, die zum Berechnen der Reifenzugkraft erforderlich sind, und eine zweite Gruppe von Sensoren (222, 224, 234) zum Erfassen von Signalen, die zum Berechnen der Schaufelausbrechkraft erforderlich sind, umfassen, und
wobei die erste Gruppe von Sensoren einen Motordrehzahlsensor, einen Turbinendrehzahlsensor eines Drehmomentwandlers, einen Sensor zum Erfassen einer Geschwindigkeitsstufe eines Getriebes, einen Fahrzeuggeschwindigkeitssensor und/oder einen Raddrehzahlerfassungssensor aufweist und eine zweite Gruppe von Sensoren einen Auslegerwinkelsensor, einen Schaufelwinkelsensor und/oder einen Auslegerzylinderdrucksensor aufweist.

8. Steuersystem für einen Radlader (10) nach Anspruch 7, wobei die Steuervorrichtung (300) ein Beschleunigungspedal-Ausgabesignal mit einem vorbestimmten Erhöhungsverhältniswert an die Motorsteuervorrichtung (400) ausgibt, wenn der autonome Aushubarbeitsmodus aktiviert wird, um die Motordrehzahl zu erhöhen.

9. Steuersystem für einen Radlader (10) nach Anspruch 7, wobei das erste Reifenschlupfentfernungs-Steuersignal ein Beschleunigungspedal-Ausgabesignal mit einem vorbestimmten Verringerungsverhältniswert aufweist.

10. Steuersystem für einen Radlader (10) nach Anspruch 7, wobei das zweite Reifenschlupfentfernungs-Steuersignal ein Vorsteuerdrucksignal zum Erhöhen eines Hubes eines Auslegerzylinders (22) aufweist.

## Revendications

1. Procédé de commande d'un chargeur sur pneus (10), comprenant :
le déplacement du chargeur sur pneus (10) vers l'avant de telle sorte qu'un godet (30) pénètre dans un agrégat pour effectuer un travail d'excavation ;
l'obtention de signaux utilisables pour déterminer un patinage de pneu du chargeur sur pneus (10) pendant le travail d'excavation ;
l'exécution d'algorithmes de prédiction obtenus par entraînement pour déterminer si le patinage de pneu se produit ou non ;
la diminution d'une vitesse de moteur et le levage du godet (30) pour supprimer le patinage de pneu jusqu'après un point auquel une force de traction de pneu et une force d'arrachage de godet sont égales l'une à l'autre, en cas de patinage de pneu ; et
le déplacement du godet (30) le long d'une trajectoire d'excavation autonome prédéfinie lorsque le patinage de pneu est supprimé,
dans lequel l'exécution des algorithmes de prédiction comprend une exécution d'algorithmes entraînés au moyen de données sur un premier groupe de signaux pour la force de traction de pneu et sur un second groupe de signaux pour la force d'arrachage de godet comme données d'apprentissage pour la détermination du patinage de pneu,
dans lequel l'obtention des signaux utilisables pour déterminer le patinage de pneu du chargeur sur pneus (10) comprend une obtention du premier groupe de signaux requis pour calculer la force de traction de pneu et une obtention du second groupe de signaux requis pour calculer la force d'arrachage de godet, et
dans lequel le premier groupe de signaux comporte un signal de vitesse de rotation de moteur, un signal de vitesse de rotation de turbine d'un convertisseur de couple, un signal de palier de vitesse d'une transmission, un signal de vitesse de véhicule et/ou un signal de vitesse de rotation de roue, et le second groupe de signaux comporte un signal de course d'un vérin de flèche (22), un signal de course d'un vérin de godet (32) et/ou un signal de pression du vérin de flèche (22).

2. Procédé selon la revendication 1, dans lequel le signal de vitesse de rotation de roue est obtenu à partir d'un encodeur installé dans le pneu.

3. Procédé selon la revendication 1, dans lequel le déplacement du chargeur sur pneus (10) vers l'avant pour effectuer le travail d'excavation comprend une augmentation d'une vitesse de moteur sans qu'un opérateur n'appuie sur une pédale d'accélération (142).

4. Procédé selon la revendication 1, dans lequel le levage du godet (30) lorsque le patinage de pneu se produit comprend une augmentation d'une course d'un vérin de flèche (22).

5. Procédé selon la revendication 1, comprenant en outre :
la détermination d'un instant auquel le godet (30) pénètre dans l'agrégat et un palier de vitesse d'une transmission est rétrogradé du deuxième palier au premier palier comme instant de démarrage du travail d'excavation.

6. Procédé selon la revendication 1, comprenant en outre :
l'arrêt du mode de travail d'excavation autonome lorsqu'un angle du godet (30) est dans l'état de cavage maximal.

7. Système de commande d'un chargeur sur pneus (10), comprenant :
une pluralité de capteurs installés respectivement dans un moteur (100) et un appareil de travail et un appareil de déplacement entraînés par le moteur (100) pour détecter des signaux utilisables pour déterminer un patinage de pneu du chargeur sur pneus (10) ;
un appareil de commande (300) configuré pour fournir en sortie un signal de commande pour effectuer un mode de travail d'excavation autonome du chargeur sur pneus (10), exécuter des algorithmes de prédiction obtenus par apprentissage sur les signaux reçus en provenance des capteurs pour déterminer si le patinage de pneu se produit ou non et fournir en sortie des premiers et seconds signaux de commande de suppression de patinage de pneu de façon à supprimer le patinage de pneu et lui faire atteindre une valeur souhaitée ;
un dispositif de commande de moteur (400) configuré pour diminuer une vitesse de rotation de moteur selon le premier signal de commande de suppression de patinage de pneu ; et
un dispositif de commande de travail configuré pour lever un godet (30) du chargeur sur pneus (10) selon le second signal de commande de suppression de patinage de pneu,
dans lequel la vitesse de rotation de moteur est diminuée et le godet (30) est levé jusqu'après un point auquel une force de traction de pneu et une force d'arrachage de godet sont égales l'une à l'autre, en cas de patinage de pneu ;
dans lequel l'appareil de commande (300) comprend un récepteur de données (310) configuré pour recevoir les signaux en provenance des capteurs, un appareil de détermination (320) configuré pour exécuter des algorithmes de réseau de neurones sur les signaux pour déterminer si le patinage de pneu se produit ou non, et une partie sortie (330) configurée pour fournir en sortie les premiers et seconds signaux de commande de suppression de patinage de pneu respectivement au dispositif de commande de moteur (400) et au dispositif de commande de travail,
dans lequel les capteurs comprennent un premier groupe de capteurs (104, 122, 132) pour détecter des signaux requis pour calculer la force de traction de pneu et un second groupe de capteurs (222, 224, 234) pour détecter des signaux requis pour calculer la force d'arrachage de godet, et
dans lequel le premier groupe de capteurs comporte un capteur de vitesse de moteur, un capteur de vitesse de rotation de turbine d'un convertisseur de couple, un capteur de détection de palier de vitesse d'une transmission, un capteur de vitesse de véhicule et/ou un capteur de détection de vitesse de roue, et un second groupe de capteurs comporte un capteur d'angle de flèche, un capteur d'angle de godet et/ou un capteur de pression de vérin de flèche.

8. Système de commande d'un chargeur sur pneu (10) selon la revendication 7, dans lequel l'appareil de commande (300) fournit en sortie un signal de sortie de pédale d'accélération présentant une valeur de rapport d'augmentation prédéfinie au dispositif de commande de moteur (400) lorsque le mode de travail d'excavation autonome est démarré, pour augmenter la vitesse de rotation du moteur.

9. Système de commande d'un chargeur sur pneu (10) selon la revendication 7, dans lequel le premier signal de commande de suppression de patinage de pneu comporte un signal de sortie de pédale d'accélération présentant une valeur de rapport de diminution prédéfinie.

10. Système de commande d'un chargeur sur pneu (10) selon la revendication 7, dans lequel le second signal de commande de suppression de patinage de pneu comporte un signal de pression pilote pour augmenter une course d'un vérin de flèche (22).
